# EUROPÄISCHE PATENTSCHRIFT

(11) **EP 4 291 924 B1**
(45) Veröffentlichungstag und Bekanntmachung des Hinweises auf die Patenterteilung: **04.11.2026**
(21) Anmeldenummer: 22707648.6
(22) Anmeldetag: 07.02.2022
(51) Int. Cl.: G01S 13/34, G01S 13/42

(54) **RADAR-SYSTEM SOWIE ENTSPRECHENDES VERFAHREN**
RADAR SYSTEM AND CORRESPONDING METHOD
SYSTÈME RADAR ET PROCÉDÉ CORRESPONDANT

(30) Priorität: 12.02.2021 DE 102021103398; 13.07.2021 DE 102021118074
(43) Veröffentlichungstag der Anmeldung: 20.12.2023
(73) Patentinhaber: Symeo GmbH, 85579 Neubiberg (DE)
(72) Erfinder: KIRSCH, Fabian, 27619 Schiffdorf (DE); MAMMITZSCH, Christoph, 85579 Neubiberg (DE); SCHÜTZ, Martin, 90419 Nürnberg (DE); CHRISTMANN, Mark, 83246 Unterwössen (DE)
(74) Vertreter: Meissner Bolte Partnerschaft mbB
(86) Internationale Anmeldenummer: PCT/EP2022/052868
(87) Internationale Veröffentlichungsnummer: WO 2022/171565

(56) Entgegenhaltungen:
- WO-A1-2020/107234
- US-A1- 2019 285 725
- US-B1- 6 750 809

## Beschreibung

Die Offenbarung betrifft ein Radar-System, insbesondere zur Erfassung eines Umfeldes, sowie ein entsprechendes Verfahren.

Radar-Verfahren und entsprechende Systeme zur Erfassung eines Umfeldes sind grundsätzlich bekannt. In [1] (= "Concept and Implementation of a PLL-Controlled Interlaced Chirp Sequence Radar for Optimized Range-Doppler Measurements, IEEE Transactions on Microwave Theory and Techniques" (Volume: 64, Issue: 10, Oct. 2016), Page(s): 3280 - 3289, DOI: 10.1109/TMTT.2016.2599875) wird ein Konzept unter Verwendung von Chirp-Sequenzen vorgeschlagen, um Entfernungs- bzw. Geschwindigkeitsmessung mittels Radar zu verbessern. Dieses Konzept wird jedoch, insbesondere in der technischen Realisierung bzw. auch in Bezug auf die Vielzahl von dort vorgeschlagenen Korrekturschritten, als vergleichsweise aufwändig empfunden.

Es ist Aufgabe der Offenbarung, ein Radar-System zur Erfassung eines Umfeldes, insbesondere für ein Fahrzeug und/oder eine Transportvorrichtung und/oder zur stationären Anwendung, vorzuschlagen, mit dem auf vergleichsweise einfache Art und Weise vergleichsweise präzise Radarmessungen, möglich sind. Insbesondere sollen auch für vergleichsweise große Abstände und/oder hohe Geschwindigkeiten (relative Radial-Geschwindigkeiten) eindeutige Messergebnisse erzielbar sein. Diese Aufgabe wird insbesondere durch die Merkmale des Anspruchs 1 gelöst. Insbesondere wird die Aufgabe gelöst durch ein Radar-System zur Erfassung eines Umfeldes (vorzugsweise zur Erfassung eines Abstandes und/oder einer Geschwindigkeit, insbesondere relativen Radial-Geschwindigkeit, eines Objektes und/oder Struktur des Umfeldes bzw. eines Zieles), insbesondere für ein Fahrzeug (beispielsweise Kraftfahrzeug, insbesondere mit einer Funktion zum zumindest teilweisen autonomen Fahren, oder ein Fluggerät, beispielsweise Flugzeug oder Hubschrauber, insbesondere mit einer Funktion zum zumindest teilweise autonomen Fliegen und/oder unbemannt) und/oder für eine Transportvorrichtung (beispielsweise für einen Kran) und/oder zur stationären Anwendung, umfassend: mindestens eine Sende-Empfangseinheit zum Senden und Empfangen von Radarsignalen, die konfiguriert ist, eine Anzahl (insbesondere Vielzahl) N von (insbesondere aufeinanderfolgenden, ggf. zueinander zeitlich beabstandeten) physikalischen, Chirp Signalen auszusenden, aus denen eine Anzahl (insbesondere Vielzahl) M von virtuellen Chirp Signalen (die miteinander zeitlich überlappen können) gebildet werden kann bzw. gebildet wird, wobei das jeweilige virtuelle Signal mehrere, insbesondere M, Abtastpunkte umfasst, die sich auf die physikalischen Chirps verteilen. Bei der Vielzahl N von physikalischen Signalen kann es sich insbesondere um Einzelsignale einer Signal-Sequenz handeln, wobei die Einzelsignale beispielsweise voneinander beabstandet sind (mit konstantem Abstand bzw. äquidistant oder zumindest teilweise - bezogen auf eine Untergruppe aller Signale - oder sämtlich mit nicht-konstantem Abstand bzw. nicht-äquidistant). Form und Anzahl der jeweiligen Signale kann vorgegeben werden (beispielsweise extern). Es ist auch möglich, dass das Radar-System eine Einheit (Recheneinheit) aufweist, die konfiguriert ist, auf Grundlage von externen Vorgaben entsprechend angepasste Signale sowie Signalformen festzulegen. Ein Gedanke der Offenbarung liegt darin, nicht nur (winkelmodulierte) physikalische Signale tatsächlich auszusenden, sondern auch mindestens ein virtuelles Signal aus den physikalischen Signalen bzw. Abtastpunkte verschiedener physikalischer Signale zu bilden bzw. zu definieren.

Ein virtuelles Signal kann sich aus einer Vielzahl von Abtastpunkten zusammensetzen, bei denen jeder einzelne einem einzelnen physikalischen Signal zugeordnet ist. Beispielsweise kann ein erstes virtuelles Signal den jeweils (zeitlich gesehen) ersten Abtastpunkt der jeweiligen physikalischen Signale aufweisen, ein zweites virtuelles Signal den jeweiligen zweiten Abtastpunkt (optional: und so weiter).

Besonders bevorzugt umfasst das Radar-System eine Auswerteeinheit (die teilweise oder vollständig durch die (erste) Sende-Empfangseinheit ausgebildet sein kann, oder teilweise oder vollständig zusätzlich zu der Sende-Empfangseinheit ausgebildet sein kann), wobei die Auswerteeinheit aus einem von einem Objekt des Umfeldes reflektierten (insbesondere heruntergemischten) von der Sende-Empfangseinheit empfangenen (und ursprünglich von dieser stammenden) Radarsignal, mindestens einen Objektparameter (insbesondere eine Entfernung oder eine von dieser abhängigen und/oder auf dieser basierenden Größe und/oder eine Geschwindigkeit, insbesondere Radial-Geschwindigkeit, oder eine von dieser abhängigen und/oder auf dieser basierenden Größe) bestimmt, wobei die Auswerteeinheit den jeweiligen Objektparameter (also beispielsweise die Entfernung oder die Radial-Geschwindigkeit) unter Berücksichtigung von sowohl (mehreren, insbesondere allen) Abtastpunkten innerhalb eines (jeweiligen) physikalischen Signals (bzw. unter Berücksichtigung des (jeweiligen) physikalischen Signals selbst bzw. der (jeweiligen) physikalischen Signale selbst) als auch von (mehreren, insbesondere allen) Abtastpunkten innerhalb eines (jeweiligen) virtuellen Signals (bzw. des (jeweiligen) virtuellen Signals selbst bzw. der (jeweiligen) virtuellen Signale selbst) bestimmt. Besonders bevorzugt kann die Auswerteeinheit den jeweiligen Objektparameter unter Berücksichtigung sowohl einer Slow-time-Frequenz, als auch einer Fast-time-Frequenz (werden jeweils unten weiter erläutert) bestimmen. Unter einer Berücksichtigung (bzw. Verwendung bzw. Heranziehung) des jeweiligen Signals (bzw. dessen Abtastpunkten) bei der Bestimmung des Objektparameters ist insbesondere zu verstehen, dass das jeweilige Signal (bzw. die entsprechenden Abtastpunkte) bei der genannten Bestimmung (insbesondere unmittelbar) ausgewertet werden, beispielsweise innerhalb einer entsprechenden Rechenoperation. Insbesondere soll die alleinige Definition eines virtuellen Signals noch nicht als entsprechende Berücksichtigung (bzw. Verwendung) dieses Signals bei der Bestimmung des Objektparameters verstanden werden.

Das offenbarungsgemäße Radar-System ist vergleichsweise effizient. Insbesondere werden vergleichsweise wenige Rechenschritte benötigt, um die Objektparameter zuverlässig zu bestimmen bzw. zu schätzen.

Unter einer Fast-Time ist insbesondere eine Zeit zu verstehen, die während eines jeweiligen physikalischen Signals vergeht. Alternativ oder zusätzlich kann eine Fast-Time als Zeit verstanden werden, die dem zeitlichen Abstand zweier (zeitlich aufeinanderfolgender) Abtastpunkte des jeweiligen physikalischen Signals entspricht.

Unter einer Slow-Time ist insbesondere eine Zeit zu verstehen, die während eines jeweiligen virtuellen Signals vergeht. Alternativ oder zusätzlich kann unter einer Slow-Time eine Zeit verstanden werden, die dem zeitlichen Abstand zweier (zeitlich aufeinanderfolgender) Abtastpunkte des jeweiligen virtuellen Signals entspricht.

Unter einer Fast-Time-Frequenz ist insbesondere eine Signal-Frequenz zu verstehen, die während der Aussendung des physikalischen Signals auftritt.

Unter einer Slow-Time-Frequenz ist insbesondere eine Signal-Frequenz zu verstehen, die bei der Betrachtung eines jeweiligen virtuellen Signals auftritt und vorzugsweise auf eine Abtastrate der Slow-Time normiert ist (so dass sie ggf. dimensionslos sein kann).

Unter einem Objektparameter ist insbesondere ein Parameter zu verstehen, der das zu erfassende Objekt (Ziel bzw. Zielstruktur) hinsichtlich seiner Position und/oder Orientierung und/oder Fortbewegung (translatorisch und/oder rotatorisch) charakterisiert. Vorzugsweise handelt es sich bei dem Objektparameter um eine einzelne physikalische Größe, also nicht um einen Parametersatz.

Gemäß einem besonders bevorzugten Aspekt (der insbesondere mit den obigen und/oder nachfolgenden Aspekten kombinierbar ist) sind die virtuellen und/oder physikalischen Signale an Systemanforderungen anpassbar und/oder angepasst. Vorzugsweise sind die virtuellen und/oder physikalischen Signale an eine vorgegebene Auflösung und/oder Genauigkeit und/oder einen Eindeutigkeitsbereich für eine Entfernungs- und/oder Geschwindigkeitsbestimmung und/oder eine vorgegebene Time-on-target anpassbar. Gemäß diesem Gedanken ist das System (insbesondere eine Rechen- und/oder Auswerteeinheit, beispielsweise die obige Auswerteeinheit) derart konfiguriert, dass bestimmte Vorgaben hinsichtlich zu erreichender Anforderungen (beispielsweise eine bestimmte maximale Geschwindigkeit, bei der eine eindeutige Messung möglich sein soll) insbesondere bei der Bestimmung bzw. Festlegung von virtuellen und/oder physikalischen Signalen herangezogen werden bzw. werden können. Konkret können zunächst aufgrund der vorgegebenen Anforderungen entsprechende virtuelle Signale definiert werden, wobei (beispielsweise in einem darauffolgenden Schritt) entsprechende physikalische Signale definiert (und letztlich dann auch ausgesendet) werden.

Die physikalischen und/oder virtuellen Signale können rampenförmig bzw. durch lineare in der Frequenz modulierte Signale ausgebildet sein (bzw. jeweils durch eine, insbesondere eine einzelne, Rampe gebildet werden). Die physikalischen Signale können durch Aufwärts-Rampen gebildet werden. Alternativ oder zusätzlich können die virtuellen Signale durch Aufwärts-Rampen gebildet werden. Die physikalischen Signale können durch Abwärts-Rampen gebildet werden. Alternativ oder zusätzlich können auch die virtuellen Signale durch Abwärts-Rampen gebildet werden. Es ist möglich, dass die physikalischen Rampen durch Aufwärts-Rampen gebildet werden und die virtuellen Signale durch Abwärts-Rampen. Weiterhin ist es möglich, dass die physikalischen Signale durch Abwärts-Rampen gebildet werden und die virtuellen Signale durch Aufwärts-Rampen. Insbesondere wenn die Steigungen der Rampen von physikalischen und virtuellen Signalen nicht gleich sind (hinsichtlich ihres Vorzeichens), können gute Ergebnisse erzielt werden.

Die Vielzahl von physikalischen Signalen (innerhalb einer Sequenz) kann mindestens zwei oder mindestens vier oder mindestens 10 und/oder höchstens 1000 oder höchstens 100 betragen. Die Vielzahl von (einer bestimmten Sequenz von physikalischen Signalen zugeordneten) virtuellen Signalen kann mindestens zwei oder mindestens vier oder mindestens 10 und/oder höchstens 1000 oder höchstens 100 Signale betragen. Die jeweilige Vielzahl von physikalischen bzw. virtuellen Signalen kann auch als jeweilige Signal-Sequenz bezeichnet werden. Mit einer solchen Signal-Sequenz wird dann vorzugsweise die entsprechende Radarmessung durchgeführt.

Vorzugsweise wird die Entfernung (d) oder die von dieser abhängigen Größe (insbesondere die Signallaufzeit (τ)) oder die auf dieser basierenden Größe unter Berücksichtigung einer Slow-Time-Frequenz (f_{slow}) und/oder einer Fast-Time-Frequenz (fᵣₐₛₜ) und/oder einer Sweep-Rate der virtuellen Signale (µ_{P}) und/oder einer Sweep-Rate der physikalischen Signale (µ_{R}) und/oder einer Signaldauer (T_{P}) der virtuellen Signale, Chirpdauer, und/oder der mittleren HF-Sendefrequenz (f_{c}), bestimmt, vorzugsweise unter Berücksichtigung (Heranziehung) des folgenden oder eines analogen (beispielsweise mindestens ein abweichendes Vorzeichen aufweisenden) Zusammenhangs: $\left(\begin{matrix}{f}_{slow} \\ {f}_{fast}\end{matrix}\right) = A \left(\begin{matrix}d \\ v\end{matrix}\right)$ $\left(\begin{matrix}d \\ v\end{matrix}\right) = {A}^{- 1} \left(\begin{matrix}{f}_{slow} \\ {f}_{fast}\end{matrix}\right)$ mit $A = \frac{2}{c} \left[\begin{matrix}{μ}_{P} & {f}_{c} \\ {μ}_{R} & {f}_{c}\end{matrix}\right] \left[\begin{matrix}1 & {T}_{P} \\ 0 & 1\end{matrix}\right] .$

Vorzugsweise wird die Geschwindigkeit (v) oder die von dieser abhängigen und/oder auf dieser basierenden Größe unter Berücksichtigung einer Slow-Time-Frequenz (f_{slow}) und/oder einer Fast-Time-Frequenz (f_{fast}) und/oder einer Sweep-Rate der virtuellen Signale (µ_{P}) und/oder einer Sweep-Rate der physikalischen Signale (µ_{R}) und/oder einer Signaldauer (T_{P}) der virtuellen Signale, Chirpdauer, und/oder der mittleren HF-Sendefrequenz (f_{c}), bestimmt, vorzugsweise unter Berücksichtigung (Heranziehung) des folgenden oder eines analogen (beispielsweise mindestens ein abweichendes Vorzeichen aufweisenden) Zusammenhangs: $\left(\begin{matrix}{f}_{slow} \\ {f}_{fast}\end{matrix}\right) = A \left(\begin{matrix}d \\ v\end{matrix}\right)$ $\left(\begin{matrix}d \\ v\end{matrix}\right) = {A}^{- 1} \left(\begin{matrix}{f}_{slow} \\ {f}_{fast}\end{matrix}\right)$ mit $A = \frac{2}{c} \left[\begin{matrix}{μ}_{P} & {f}_{c} \\ {μ}_{R} & {f}_{c}\end{matrix}\right] \left[\begin{matrix}1 & {T}_{P} \\ 0 & 1\end{matrix}\right] .$

Vorzugsweise wird die Aussendung der physikalischen Signale (Signal-Sequenz) so durchgeführt, dass der Eindeutigkeitsbereich einer Geschwindigkeitsmessung unabhängig von der Länge des/der jeweiligen physikalischen Signals/-e ist (anders als beispielsweise in [1], vgl. Gleichungen (20), (21)).

Besonders bevorzugt ist das System als MIMO-Radar-System ausgebildet.

In Ausführungsformen kann das System mindestens zwei Sendekanäle aufweisen, die vorzugsweise zum zeitlichen Multiplexen konfiguriert sind, insbesondere derart, dass die entsprechenden gesendeten Signale dieselben virtuellen Signale (mit einem entsprechenden zeitlichen Versatz) ausbilden (also insbesondere ein jeweiliges virtuelles Signal durch entsprechende Abtastpunkte von physikalischen Signalen der beiden oder mehreren Sendkanäle definiert werden kann).

Alternativ oder zusätzlich kann das System mindestens zwei Sendekanäle aufweisen, die vorzugsweise zum Frequenz-Multiplexen (frequency division mulitplex) konfiguriert sind, weiter vorzugsweise zum Fast-time-Frequenz-Multiplexen und/oder Slow-time-Frequenz-Multiplexen.

In Ausführungsformen können mindestens zwei (sich insbesondere zeitlich überlappende) Gruppen von virtuellen Signalen definiert werden, die durch entsprechende Sequenzen von physikalischen Signalen (insbesondere durch zeitliches Multiplexen der physikalischen Signale) generiert bzw. definiert werden.

Ein Abstand zwischen den einzelnen physikalischen Signalen kann äquidistant oder (zumindest in Bezug auf eine Untergruppe der physikalischen Signale, ggf. in Bezug auf sämtliche physikalischen Signale) nicht-äquidistant sein.

Mehrere virtuelle Signale können sich zeitlich überlappen.

Die obengenannte Aufgabe wird weiterhin insbesondere gelöst durch ein Verfahren zur Erfassung eines Umfeldes, insbesondere unter Verwendung des obigen und/oder nachfolgend beschrieben Systems, wobei mindestens eine Anzahl/Vielzahl M von physikalischen Chirp Signalen ausgesendet wird, mindestens eine Anzahl/Vielzahl N von virtuellen Chirp Signalen definiert wird, wobei jedes virtuelle Signal mehrere, insbesondere M, Abtastpunkte umfasst, die sich auf die physikalischen Chirps verteilen, und wobei aus einem von einem Objekt des Umfeldes reflektierten, insbesondere heruntergemischten, von der Sende-Empfangseinheit empfangenen Radarsignal, mindestens ein Objektparameter bestimmt wird, wobei der jeweilige Objektparameter unter Berücksichtigung sowohl von (mehreren) Abtastpunkten innerhalb eines (jeweiligen) physikalischen Signals als auch von (mehreren) Abtastpunkten innerhalb eines (jeweiligen) virtuellen Signals bestimmt wird.

Weitere Verfahrensmerkmale ergeben sich insbesondere aus der obigen und/oder nachfolgenden Beschreibung von Funktionen sowie Konfigurationen des Systems. Diese können als entsprechende Verfahrensschritte durchgeführt sein (wobei entsprechende Auswerte- und/oder Rechenschritte durch eine der oben und/oder nachfolgend erwähnten Einheiten ausgeführt werden kann oder durch irgendeine sonstige Rechen- und/oder Auswerteeinheit).

Die obengenannte Aufgabe wird weiterhin durch ein Fahrzeug (insbesondere Kraftfahrzeug, beispielsweise autonomes Kraftfahrzeug, insbesondere Pkw und/oder LKW) und/oder eine stationäre Einrichtung gelöst, umfassend das obige System und/oder konfiguriert zum Ausführen des obigen Verfahrens.

Die obengenannte Aufgabe wird weiterhin insbesondere gelöst durch eine Rechen- und/oder Auswerteeinrichtung, die zum Durchführen des obigen Verfahrens konfiguriert ist, und/oder die obigen Merkmale aufweist, die für eine/die Auswerteeinrichtung beschreiben sind.

Die obengenannte Aufgabe wird weiterhin insbesondere gelöst durch ein computerlesbares-Speichermedium, insbesondere zur Durchführungen des obigen Verfahrens und/oder als Bestandteil des obigen Systems und/oder der obigen Auswerteeinheit, welches Instruktionen enthält, die mindestens einen Prozessor dazu veranlassen, die folgenden Schritte zu implementieren, wenn die Instruktionen durch einen Prozessor ausgeführt werden:
Bestimmung mindestens eines Objektparameters aus einem von einem Objekt des Umfeldes reflektierten, insbesondere heruntergemischten, von der Sende-Empfangseinheit empfangenen Radarsignal, wobei der jeweilige Objektparameter unter Berücksichtigung sowohl von Abtastpunkten innerhalb eines physikalischen Signals als auch von Abtastpunkten innerhalb eines virtuellen Signals bestimmt wird. Weitere ausführungsgemäße Schritten ergeben sich aus der obigen und/oder nachfolgenden Beschreibung.

Ausführungsbeispiele werden nachfolgend anhand der Figuren näher erläutert.
- Fig. 1: ein Diagramm über eine Abtastung im Seiten-Frequenzbereich;
- Fig. 2: ein 2D-Fourier-Spektrum für verschiedene Ziele und Grenzfälle für Abstand und Geschwindigkeit;
- Fig. 3: ein Diagramm für TDM-Kanäle, die auf die gleiche virtuelle Rampe gelegt sind;
- Fig. 4: Fast-Time FDM-Kanäle, die verschiedenen Fast-Time-Frequenzen wie Offsets zugeordnet sind;
- Fig. 5: ein Diagramm über eine verschachtelte Übertragung von zwei Gruppen physikalischer Rampen; und

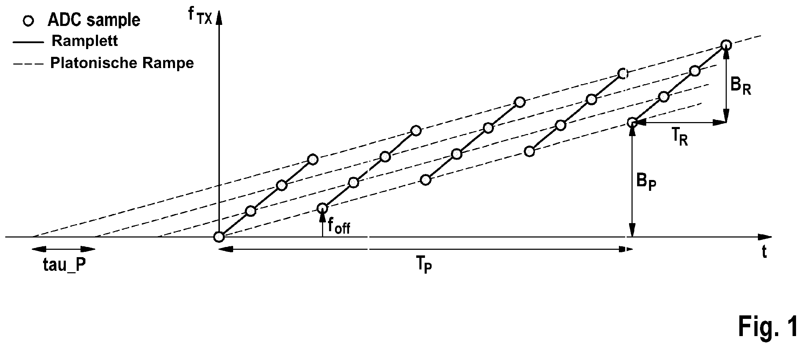

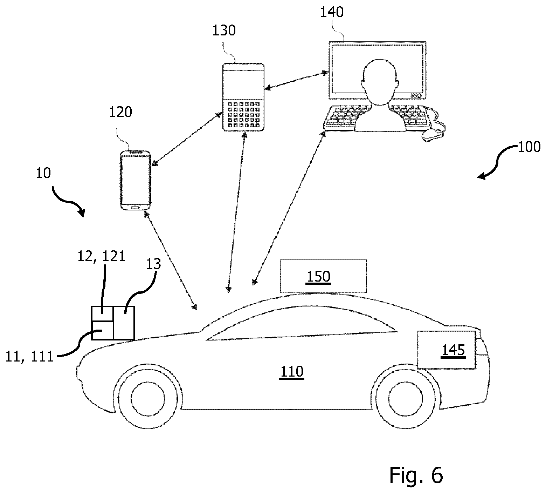

Fig. 6 eine schematische Darstellung eines Systems, umfassend ein autonomes Fahrzeug und ein Radar-System gemäß Ausführungsformen. In Fig. 1 sind physikalische Chirps (ein Chirp kann auch als Ramplett bzw. *ramplet* bezeichnet werden) gezeigt, mit entsprechenden (durch eine ADC generierten) Abtastpunkten aus denen sich wiederum virtuelle Rampen (auch genannt: platonische Rampen bzw. *platonic ramps*) in einer Zeit-Frequenz-Ebene ergeben. Insbesondere werden diese dabei so festgelegt, dass ein nachfolgendes Verfahren bzw. ein nachfolgender Algorithmus zur Prozessierung in der Lage ist, die physikalische Entfernung und/oder (Radial-) Geschwindigkeit eines Ziels zu rekonstruieren, die ggf. durch eine 2D-Punktspreizfunktion (und ihre Nebenkeulen identifiziert werden können). Die Abtastpunkte ergeben insgesamt eine *ADC sample.*

Eine ADC-Abtastung (ADC = Anlag-Digital-Converter) innerhalb der Chirps kann als Fast-time-Abtastung bezeichnet werden (fast-time sampling). Die Abtastpunkte zwischen den Chirps (auf derselbe virtuellen Rampe) können als Slow-time-Abtastpunkte bezeichnet werden.

Die Chirps und virtuellen (platonischen) Rampen können als Aufwärts- oder Abwärts-Rampen ausgeführt sein (in Fig. 1 sind jeweilige Aufwärts-Chirps gezeigt). Insbesondere ist es möglich, dass die physikalischen Signale (Chirps) als Aufwärts-Rampen und die virtuellen Signale als Abwärts-Rampen (oder umgekehrt) ausgebildet sind. Dies kann das Vorzeichen der weiter unten noch erläuterten bzw. definierten Slow-time-Frequenz oder Fast-time-Frequenz des Beat-Signals eines Ziels beeinflussen. Im Nachfolgenden wird zu Illustrierungszwecken eine Ausführungsform mit Aufwärts-Rampen als physikalischen Signalen und Aufwärts-Rampen als virtuellen Signalen erläutert (ohne Beschränkung der Allgemeinheit).

Als ein Beispiel hierfür ist die Fig. 1 gezeigt.

Die Eigenschaften der physikalischen Signale (Chirps) können von Anforderungen in einem Eindeutigkeitsbereich (für Entfernung und Doppler), einer Zielauflösung und einer Time-on-target abhängen. Die Eingangsparameter sind vorzugsweise:
- Bereichsauflösung *dR*
- eindeutiger Abstandsbereich *Rₘₐₓ*
- eindeutige Doppler-Reichweite *vₘₐₓ*
- Time-on-target *T_{target}.*

Systemparameter, die vom Radarsensor abhängen können, sind gegeben durch:
- ADC-Abtastrate *fₛ*, Abtastperiode *tₛ*
- HF-Trägerfrequenz *f*₀

Daraus können sich Modulationsparameter der physikalischen Rampen wie folgt ergeben:
- virtueller (platonischer) Rampenabstand (in Fig. 1: "tau_P"): ${τ}_{P} = \frac{c}{4 {f}_{0} {v}_{max}}$
- virtuelle Bandbreite: ${B}_{P} = \frac{c}{2 dR}$
- virtuelle Rampendauer: : *T_{P}* = *T_{target}*
- virtuelle Rampen-Sweep-Rate: ${μ}_{P} = \frac{{B}_{P}}{{T}_{P}} = \frac{c}{2 {T}_{R} {R}_{max}}$
- Frequenzinkrement: ${f}_{off} = {μ}_{P} {T}_{R} = \frac{c}{2 {R}_{max}}$
- Chirpdauer ${T}_{R} = \frac{{T}_{P} dR}{{R}_{max}}$
- Anzahl der Chirps $N = \frac{{B}_{P}}{{T}_{R}} = \frac{{R}_{max}}{{d}_{R}}$
- Chirp-Bandbreite ${B}_{R} = \frac{c \left({τ}_{P}+{t}_{s}\right)}{2 {R}_{max} {t}_{s}}$
- Chirp-Sweep-Rate ${μ}_{R} = \frac{{B}_{R}}{{T}_{R}}$

Ein einzelnes Ziel in einer Entfernung d und/oder mit der davon abhängigen Größe einer Round-trip-delay-Zeit τ, insbesondere einer zeitabhängigen Entfernung d(t) und/oder einer davon abhängigen Größe Round-trip-delay-Zeit τ(t) eines Ziels mit einer (radialen) Geschwindigkeit kann das folgende Beat-Signal (heruntergemischtes Signal) erzeugen:${f}_{b} \left(t, k\right) = exp \left\{-j2π\left({f}_{o}τ\left(t+{kT}_{R}\right)+{f}_{off}τ\left(t+{kT}_{R}\right)+{μ}_{R}tτ\left(t+{kT}_{R}\right)-\frac{1}{2}{μ}_{R}τ{\left(t+{kT}_{R}\right)}^{2}\right)\right\}$ Wobei t die Zeit innerhalb des physikalischen Signals (fast-time) und k den Index des physikalischen Signals innerhalb des virtuellen Signals (slow-time) bezeichnet.

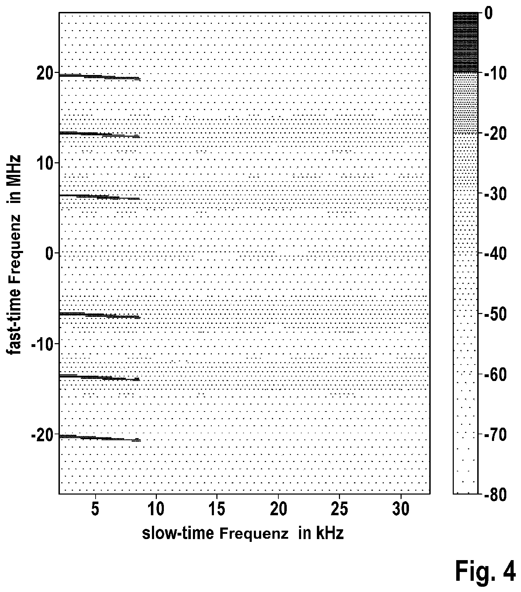

Durch Transformation des Beat-Signals in ein 2D-Fourier-Spektrum (ohne zusätzliche Phasen- und/oder Frequenz-Korrektur, wie z. B. in [1], vgl. Abbildung 4) erhält man die (normierten, siehe oben) Slow-time-Frequenzen und Fast-time-Frequenzen des Ziels (Targets).

Diese Gleichung zeigt insbesondere, dass die Entfernungs- und Geschwindigkeitsachsen nicht (zwingend) orthogonal zueinander sind, da die Ziel-Entfernung und Ziel-Geschwindigkeit sowohl in die fast-time als auch in die slow-time Frequenz einfließt. Aus diesem Grund kann dieses 2D-Fourier-Spektrum auch als unaligned space bezeichnet werden.

Mit der folgenden, affinen Transformation wird zwischen dem unaligned space und dem Entfernungs-Geschwindigkeits-Raum transformiert: $\left(\begin{matrix}{f}_{slow} \\ {f}_{fast}\end{matrix}\right) = A \left(\begin{matrix}d \\ v\end{matrix}\right)$ $\left(\begin{matrix}d \\ v\end{matrix}\right) = {A}^{- 1} \left(\begin{matrix}{f}_{slow} \\ {f}_{fast}\end{matrix}\right)$ mit $A = \frac{2}{c} \left[\begin{matrix}{μ}_{P} & {f}_{c} \\ {μ}_{R} & {f}_{c}\end{matrix}\right] \left[\begin{matrix}1 & {T}_{P} \\ 0 & 1\end{matrix}\right] .$

Dies kann auf Basis einer (resultierenden) Zielliste geschehen und insbesondere nicht auf Basis eines gesamten Frequenz-Spektrums, optional nach vollständiger MIMO-Verarbeitung und/oder einer (insbesondere darauffolgenden) CFAR-Prozessierung (CFAR = constant false alarm rate) und/oder einer Zieldetektion.

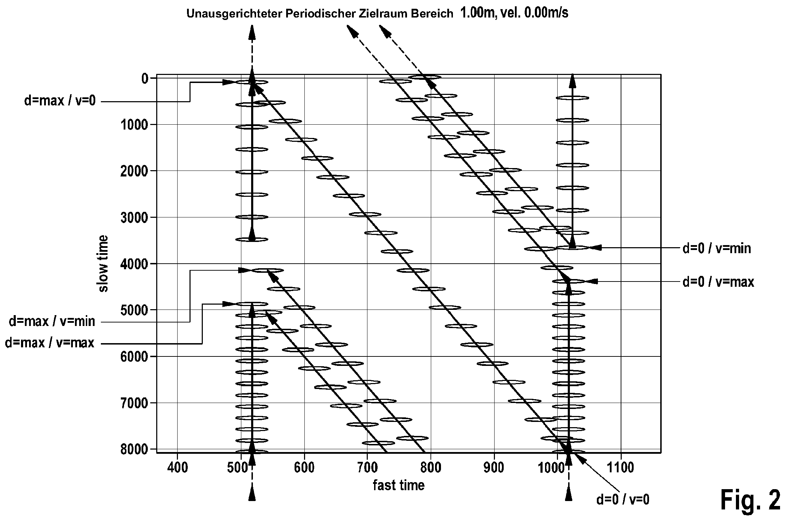

Fig. 2 zeigt ein 2D-Fourrier-Spektrum des Empfangssignals (Beat-Signals), das eine Vielzahl von überlagerten Ziel-Echos aufweist. Aus diesem Spektrum können Abstände und Geschwindigkeiten der Ziele ausführungsgemäß gemäß den Gleichungen X bestimmt werden. Das 2D-Fourier-Spektrum zeigt verschiedene Ziele und Grenzfälle für Abstand und Geschwindigkeit. Es werden bestimmte Grenzfälle (z. B. maximaler Abstand/maximale Geschwindigkeit in Bezug auf die Eindeutigkeit) dargestellt. "slow time"/"fast time" steht für "slow-time-Frequenz"/"fast-time-Frequenz".

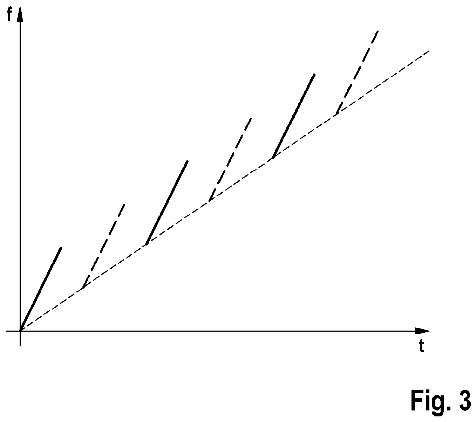

Fig. 3 zeigt TDM (time division multiplexing)-MIMO-Kanäle, die auf derselben virtuellen Rampe angeordnet sind (bzw. auf die gleiche virtuelle Rampe gelegt sind). Grundsätzlich werden bei TDM mehrere Sender nacheinander eingeschaltet. Bei dieser Modulationswellenform ist es bevorzugt, mit allen TX-Kanälen die gleichen virtuellen Rampen abzutasten.

In diesem Fall ist die Phasenfehlerkorrektur des k-ten TDM-Kanals eine lineare Phasenverschiebung entlang der Slow-time-Frequenz (Abtastfrequenz). ${H}_{TDM , k} \left({f}_{slow}\right) = exp \left\{-j2{πkT}_{R}{f}_{slow}\right\}$

Im TDM-Verfahren können die Modulationsparameter angepasst werden. Dies kann durch Reduktion der Chirpdauer der physikalischen Signale und/oder durch Erhöhung der virtuellen Rampendauern geschehen, wobei die jeweils anderen Parameter angepasst werden können, um die geforderten Bereiche für Auflösung und Eindeutigkeit einzuhalten. Insbesondere kann zwischen der physikalischen Rampendauer und dem Abstand zwischen zwei physikalischen Rampen innerhalb eines TDM-Kanals unterschieden werden.

Fig. 4 zeigt Fast-time-FDM-Kanäle, die verschiedenen Fast-time-Frequenz-Offsets fₒ zugeordnet sind. Durch eine versetzte Frequenz-Modulation der Sender innerhalb des Chirps können die TX-Kanäle auf der Fast-time-Frequenzachse getrennt werden, wie in Fig. 4 gezeigt. Das Beat-Signal erweitert sich hierbei zu$\begin{matrix}{f}_{b} \left(t, k\right) = exp \left\{-j2π\left({f}_{0}τ\left(t+{kT}_{R}\right)+{f}_{off}τ\left(t+{kT}_{R}\right)+{μ}_{R}tτ\left(t+{kT}_{R}\right)-\frac{1}{2}{μ}_{R}τ{\left(t+{kT}_{R}\right)}^{2}\right.\right. \\ - {f}_{o} t + {f}_{o} τ \left.\left.\left(t+{kT}_{R}\right)\right)\right\}\end{matrix}$

Bei einer solchen MIMO-Modulation kann ein Phasen-Fehler, der durch einen Offset-Modulator und eine Offset-Frequenz fₒ verursacht wird, korrigiert werden durch: ${H}_{FTFDM , {f}_{o}} \left({f}_{fast}, {f}_{slow}\right) = exp \left\{-j2{πf}_{o}τ\left({f}_{fast}, {f}_{slow}\right)\right\}$ wobei τ (f_{fast}, f_{slow}) die Round-trip-Zeit eines Ziels zur Slow-time-Frequenz f_{slow} und Fast-time-Frequenz f_{fast} ist.

Durch eine versetzte Frequenzmodulation von Sendern entlang einer virtuellen Rampe können die TX-Kanäle auf einer Slow-time-Frequenzachse getrennt werden, ähnlich wie bei einer Fast-time-FDM.

Um eine Auflösung/Empfindlichkeit der Fast-time-Frequenz oder Slow-time-Frequenz zu erhöhen, können zusätzliche Gruppen von physikalischen und/oder virtuellen Rampen verschachtelt übertragen werden. Dies ermöglicht es, eine Zielphase von einer Gruppe mit einer anderen zu vergleichen und eine Phasenabweichung bzw. Frequenz entlang einer zusätzlichen Achse zu schätzen. Diese zusätzliche Achse kann beispielsweise als Very-slow-Zeit bezeichnet werden.

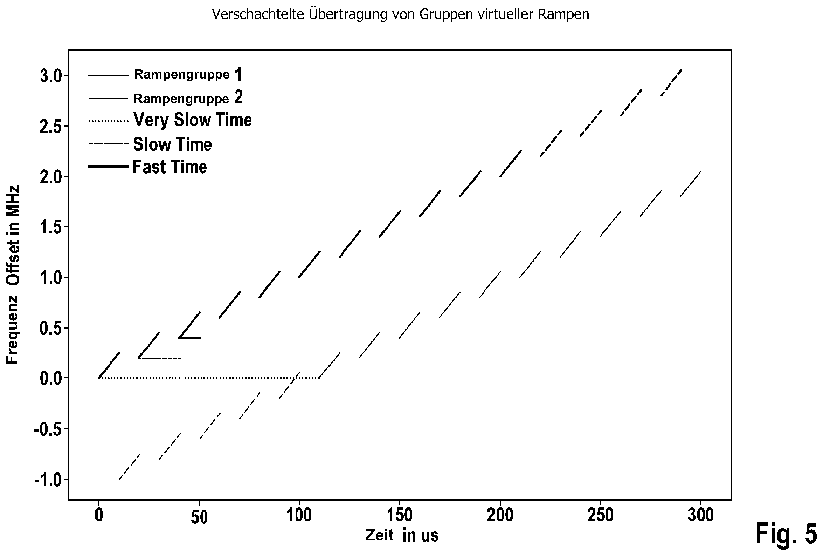

In Fig. 5 ist ein entsprechendes Beispiel für eine verschachtelte Übertragung von zwei Gruppen virtueller Rampen gezeigt. Dies kann beispielsweise den Vergleich einer Zielphase von Gruppe zu Gruppe ermöglichen. Weiterhin kann dadurch eine neue Achse (Very-Slow-Time, zusätzlich zu Fast-Time und Slow-Time) eingeführt werden.

Im Allgemeinen ist es möglich, die physikalischen und/oder virtuellen Signale auf eine nicht-äquidistante Art und Weise aneinander zu reihen, um eine Rekonstruktion der Slow-time-Frequenz und/oder Fast-time-Frequenz des Ziels mit zu einer Fourier-Transformation alternativen Verfahren, insbesondere Compressed-sensing, durchzuführen. Dies kann vorteilhaft sein, um die Auflösung und/oder den Eindeutigkeitsbereich der Frequenzschätzung für bestimmte Zielszenarien zu erweitern.

Fig. 6 zeigt ein System 100, umfassend ein autonomes Fahrzeug 110 und ein Radar-Messsystem (Radar-System) 10 gemäß Ausführungsformen. Das Radar-Messsystem 10 umfasst eine erste Radareinheit 11 mit mindestens einer ersten Radar-Antenne 111 (um entsprechende Radarsignale zu senden und/oder zu empfangen), und ggf. eine zweite Radareinheit 12 mit mindestens einer zweiten Radar-Antenne 121 (um entsprechende Radarsignale zu senden und/oder zu empfangen) sowie eine Auswerteeinheit 13.

Das System 100 kann ein Passagier-Eingabeeinrichtung und/oder - Ausgabeeinrichtung 120 (*passenger interface*)*,* einen Fahrzeugkoordinator 130 und/oder eine externe Ein- und/oder Ausgabeeinrichtung 140 (*remote expert interface*; beispielsweise für eine Leitstelle) aufweisen. In Ausführungsformen kann die externe Ein- und/oder Ausgabeeinrichtung 140 einer (gegenüber dem Fahrzeug) externen Person und/oder Einrichtung erlauben, Einstellungen am oder im autonomen Fahrzeug 110 vorzunehmen und/oder zu modifizieren. Diese externe Person/Einrichtung kann sich von dem Fahrzeugkoordinator 130 unterscheiden. Der Fahrzeugkoordinator 130 kann ein Server sein.

Das System 100 ermöglicht dem autonomen Fahrzeug 110 ein von Parametern abhängiges Fahrverhalten, die von einem Fahrzeugpassagier (beispielsweise mittels der Passagier-Eingabeeinrichtung und/oder -Ausgabeeinrichtung 120) und/oder anderen beteiligten Personen und/oder Einrichtungen (beispielsweise über den Fahrzeugkoordinator 130 und/oder die externe Ein- und/oder Ausgabeeinrichtung 140) zu modifizieren und/oder einzustellen. Das Fahrverhalten eines autonomen Fahrzeugs kann durch (expliziten) Input oder Feedback (beispielsweise durch einen Passagier, der eine maximale Geschwindigkeit oder ein relatives Komfort-Level vorgibt), durch impliziten Input oder Feedback (beispielsweise einen Puls eines Passagiers), und/oder durch andere geeignete Daten und/oder Kommunikationsweisen für ein Fahrverhalten bzw. Präferenzen vorgegeben oder modifiziert werden.

Das autonome Fahrzeug 110 ist vorzugsweise ein voll-autonomes Kraftfahrzeug (z. B. Pkw und/oder Lkw), kann aber alternativ oder zusätzlich ein halbautonomes oder (sonstiges) voll-autonomes Fahrzeug sein, beispielsweise ein Wasserfahrzeug (Boot und/oder Schiff), ein (insbesondere unbemanntes) Luftfahrzeug (Flugzeug und/oder Hubschrauber), einer fahrerloses Kraftfahrzeug (z. B. Pkw und/oder Lkw) et cetera. Zusätzlich oder alternativ kann das autonome Fahrzeug so konfiguriert sein, dass es zwischen einem halb-automatischen Zustand und einem voll-automatischen Zustand wechseln kann, wobei das autonome Fahrzeug Eigenschaften aufweisen kann, die sowohl einem halb-automatischen Fahrzeug als auch einem voll-automatischen Fahrzeug zugeordnet werden können (abhängig vom Zustand des Fahrzeugs).

Das autonome Fahrzeug 110 umfasst vorzugsweise einen Bord-Computer 145.

Die Auswerteeinheit 13 kann zumindest teilweise in und/oder an dem Fahrzeug 110 angeordnet sein, insbesondere (zumindest teilweise) in den Bord-Computer 145 integriert sein, und/oder (zumindest teilweise) in eine Berechnungseinheit zusätzlich zu dem Bord-Computer 145 integriert sein. Alternativ oder zusätzlich kann die Auswerteeinheit 13 (zumindest teilweise) in der ersten und/oder zweiten Radareinheit 11, 12 integriert sein. Falls die Auswerteeinheit 13 (zumindest teilweise) zusätzlich zum Bord-Computer 145 vorgesehen ist, kann die Auswerteeinheit 13 in Kommunikation mit dem Bord-Computer 145 sein, so dass Daten von der Auswerteeinheit 13 zu dem Bord-Computer 145 übermittelt werden können und/oder umgekehrt.

Zusätzlich oder alternativ kann die Auswerteeinheit 13 (zumindest teilweise) in die Passagier-Eingabeeinrichtung und/oder -Ausgabeeinrichtung 120, in den Fahrzeugkoordinator 130, und/oder die externe Ein- und/oder Ausgabeeinrichtung 140 integriert sein. Insbesondere in einem solchen Fall kann das Radar-Messsystem eine Passagier-Eingabeeinrichtung und/oder -Ausgabeeinrichtung 120, einen Fahrzeugkoordinator 130 und/oder eine externe Ein- und/oder Ausgabeeinrichtung 140 aufweisen.

Zusätzlich zu der mindestens einen Radareinheit 11, 12, kann das autonome Fahrzeug 110 mindestens eine weitere Sensoreinrichtung 150, umfassen (beispielsweise mindestens ein Computer-Vision-System, mindestens ein LIDAR, mindestens einen Geschwindigkeitssensor, mindestens ein GPS, mindestens eine Kamera, etc.)

Der Bord-Computer 145 kann konfiguriert sein, um das autonome Fahrzeug 110 zu steuern. Der Bord-Computer 145 kann Daten von der mindestens einen Sensoreinrichtung 150 und/oder mindestens einem anderen Sensor, insbesondere einem Sensor, der durch mindestens eine Radareinheit 11, 12 bereitgestellt bzw. ausgebildet wird, und/oder Daten von der Auswerteeinheit 13 weiterverarbeiten, um den Status des autonomen Fahrzeugs 110 zu bestimmen.

Basierend auf dem Zustand des Fahrzeugs und/oder programmierten Instruktionen, kann der Bord-Computer 145 vorzugsweise das Fahrverhalten des autonomen Fahrzeugs 110 modifizieren oder kontrollieren. Die Auswerteeinheit 13 und/oder der Bord-Computer 145 ist (sind) vorzugsweise eine (allgemeine) Berechnungseinheit, die angepasst ist, für eine I/O-Kommunikation mit einem Fahrzeug-Steuersystem und mindestens einem Sensorsystem, kann jedoch zusätzlich oder alternativ durch jegliche geeignete Berechnungseinheit (Computer) gebildet werden. Der Bord-Computer 145 und/oder die Auswerteeinheit 13 kann mit dem Internet über Drahtlos-Verbindung verbunden werden. Alternativ oder zusätzlich kann der Bord-Computer 145 und/oder die Auswerteeinheit 13 mit jeglicher Anzahl von Drahtlos- oder drahtgebundenen Kommunikationssystemen verbunden sein.

Beispielsweise kann jegliche Anzahl von elektrischen Schaltkreisen, insbesondere als Teil der Auswerteeinheit 13 und/oder des Bord-Computers 145, der Passagier-Eingabeeinrichtung und/oder -Ausgabeeinrichtung 120, dem Fahrzeugkoordinator 130 und/oder der externen Ein- und/oder Ausgabeeinrichtung 140 auf einer Platine eines entsprechenden elektronischen Gerätes implementiert sein. Die Platine kann eine allgemeine Schaltplatine ("circuit board") sein, die verschiedene Komponenten eines (internen) elektronischen Systems, einer elektronischen Einrichtung und Verbindungen für andere (periphere) Einrichtungen aufweisen kann. Konkret kann die Platine elektrische Verbindungen aufweisen, über die andere Komponenten des Systems elektrisch (elektronisch) kommunizieren können. Jegliche geeignete Prozessoren (beispielsweise digitaler Signalprozessoren, Mikroprozessoren, unterstützende Chipsätze, computerlesbare (nicht-flüchtige) Speicherelemente usw.) können mit der Platine gekoppelt sein (abhängig von entsprechenden Prozessierungs-Anforderungen, Computer-Designs etc.). Andere Komponenten, wie beispielsweise ein externer Speicher, zusätzliche Sensoren, Controller für eine Audio-Video-Wiedergabe und periphere Einrichtungen können mit der Platine verbunden sein, wie beispielsweise als Einsteck-Karten, via Kabel, oder in die Platine selbst integriert.

In verschiedenen Ausführungsformen können Funktionalitäten, die hier beschrieben sind, in emulgierter Form (als Software oder Firmware) implementiert sein, mit ein oder mehreren konfigurierbaren (beispielsweise programmierbaren) Elementen, die in einer Struktur angeordnet sind, die diese Funktion ermöglicht. Die Software oder Firmware, die die Emulation bereitstellt, kann bereitgestellt werden auf einem (nicht-flüchtigen) computerlesbaren Speichermedium, umfassend Instruktionen, die es erlauben, ein oder mehrere Prozessoren die entsprechende Funktion (das entsprechende Verfahren) auszuführen.

Verschiedene Ausführungsformen können jede geeignete Kombination der oben beschriebenen Ausführungsformen umfassen, einschließlich alternative Ausführungsformen von Ausführungsformen, die oben in konjunktiver Form beschrieben sind (z. B. kann das entsprechende "und" ein "und/oder" sein).

Darüber hinaus können einige Ausführungsformen ein oder mehrere Gegenstände umfassen (z. B. insbesondere nicht-flüchtige computerlesbare Medien), mit darauf abgespeicherten Anweisungen, die bei ihrer Ausführung zu einer Aktion (einem Verfahren) gemäß einer der oben beschriebenen Ausführungsform führen. Darüber hinaus können einige Ausführungsformen Vorrichtungen oder Systeme mit allen geeigneten Mitteln zur Ausführung der verschiedenen Vorgänge der oben beschrieben Ausführungsformen umfassen.

In bestimmten Zusammenhängen können die hier besprochenen Ausführungsformen auf Automobilsysteme, insbesondere auf autonome Fahrzeuge (vorzugsweise autonome Automobile), (sicherheitskritische) industrielle Anwendungen und/oder industrielle Prozesssteuerungen anwendbar sein.

Darüber hinaus können Teile des beschriebenen Radarsystems bzw. des beschriebenen Radar-Messsystems (bzw. allgemein: wellenbasierten Messsystems) elektronische Schaltungen aufweisen, um die hier beschriebenen Funktionen sowie Verfahren auszuführen. In einigen Fällen können ein oder mehrere Teile des jeweiligen Systems durch einen Prozessor bereitgestellt werden, der speziell für die Ausführung der hier beschriebenen Funktionen sowie Verfahrensschritte konfiguriert ist. Beispielsweise kann der Prozessor ein oder mehrere anwendungsspezifische Komponenten enthalten, oder er kann programmierbare Logikgatter enthalten, die so konfiguriert sind, dass sie die hier beschriebenen Funktionen ausführen.

An dieser Stelle sei darauf hingewiesen, dass alle oben beschriebene Teile bzw. Funktionen für sich alleine gesehen und in jeder Kombination, insbesondere die in den Zeichnungen dargestellten Details, als offenbarungswesentlich beansprucht werden. Abänderungen hiervon sind dem Fachmann geläufig.

Weiterhin wird darauf hingewiesen, dass ein möglichst breiter Schutzumfang angestrebt wird. Insofern kann die in den Ansprüchen enthaltene Offenbarung auch durch Merkmale präzisiert werden, die mit weiteren Merkmalen beschrieben (auch ohne dass diese weiteren Merkmale zwingend aufgenommen werden sollen). Explizit wird darauf hingewiesen, dass runde Klammern und der Begriff "insbesondere" im jeweiligen Kontext die Optionalität von Merkmalen hervorheben soll (was nicht im Umkehrschluss bedeuten soll, dass ohne derartige Kenntlichmachung ein Merkmal als im entsprechenden Zusammenhang zwingend zu betrachten ist).

## Patentansprüche

1. Radar-System zur Erfassung eines Umfeldes, insbesondere für ein Fahrzeug und/oder eine Transportvorrichtung, und/oder zur stationären Anwendung, umfassend:
mindestens eine Sende-Empfangseinheit zum Senden und Empfangen von Radarsignalen, die konfiguriert ist, eine Vielzahl M von physikalischen, Chirp Signalen auszusenden, aus denen eine Vielzahl N von virtuellen Chirp Signalen gebildet werden kann, wobei jedes virtuelle Signal mehrere, insbesondere M, Abtastpunkte umfasst, die sich auf die physikalischen Chirps verteilen, und
mindestens eine Auswerteeinheit, wobei die Auswerteeinheit aus einem von einem Objekt des Umfeldes reflektierten, insbesondere heruntergemischten, von der Sende-Empfangseinheit empfangenen Radarsignal, mindestens einen Objektparameter - insbesondere eine Entfernung oder eine von dieser abhängigen und/oder auf dieser basierenden Größe und/oder eine Geschwindigkeit oder eine von dieser abhängigen und/oder auf dieser basierenden Größe - bestimmt, wobei die Auswerteeinheit den jeweiligen Objektparameter unter Berücksichtigung sowohl von mehreren Abtastpunkten innerhalb eines jeweiligen physikalischen Signals als auch von mehreren Abtastpunkten innerhalb eines jeweiligen virtuellen Signals bestimmt.

2. System nach Anspruch 1, wobei die virtuellen und/oder physikalischen Signale an Systemanforderungen anpassbar sind, insbesondere an eine Vorgabe für eine Auflösung und/oder Genauigkeit und/oder Eindeutigkeit bei einer Entfernungs- und/oder Geschwindigkeitsbestimmung und/oder einer Vorgabe für eine Time-on-Target.

3. System nach einem der vorangehenden Ansprüche, wobei die physikalischen und/oder virtuellen Signale in der Frequenz linear moduliert sind und/oder rampenförmig sind.

4. System nach einem der vorangehenden Ansprüche, wobei die Entfernung (d) oder die von dieser abhängigen Größe, wie insbesondere die Signallaufzeit (τ), und/oder die auf dieser basierenden Größe, und/oder die Geschwindigkeit (v) und/oder die von dieser abhängigen und/oder auf dieser basierenden Größe unter Berücksichtigung einer Slow-Time-Frequenz (f_{slow}) und/oder einer Fast-Time-Frequenz (f_{fast}) und/oder einer Sweep-Rate der virtuellen Signale (µ_{P}) und/oder einer Sweep-Rate der physikalischen Signale (µ_{R}) und/oder einer Signaldauer (T_{P}) der virtuellen Signale, Chirpdauer, und/oder der mittleren HF-Sendefrequenz (f_{c}), bestimmt wird, vorzugsweise unter Berücksichtigung des folgenden Zusammenhangs: $\left(\begin{matrix}{f}_{slow} \\ {f}_{fast}\end{matrix}\right) = A \left(\begin{matrix}d \\ v\end{matrix}\right)$ $\left(\begin{matrix}d \\ v\end{matrix}\right) = {A}^{- 1} \left(\begin{matrix}{f}_{slow} \\ {f}_{fast}\end{matrix}\right)$ mit $A = \frac{2}{c} \left[\begin{matrix}{μ}_{P} & {f}_{c} \\ {μ}_{R} & {f}_{c}\end{matrix}\right] \left[\begin{matrix}1 & {T}_{P} \\ 0 & 1\end{matrix}\right] .$

5. System nach einem der vorangehenden Ansprüche, wobei das System als MIMO-Radar-System ausgebildet ist.

6. System nach einem der vorangehenden Ansprüche, wobei das System mindestens zwei Sendekanäle aufweist, die vorzugsweise zum zeitlichen Multiplexen konfiguriert sind, insbesondere derart, dass die entsprechenden gesendeten Signale dieselben virtuellen Signale ausbilden.

7. System nach einem der vorangehenden Ansprüche, wobei das System mindestens zwei Sendekanäle aufweist, die vorzugsweise zum Frequenz-Multiplexen konfiguriert sind, weiter vorzugsweise zum Fast-Time-Frequenz-Multiplexen und/oder Slow-Time-Frequenz-Multiplexen.

8. System nach einem der vorangehenden Ansprüche, wobei mindestens zwei Gruppen von virtuellen und/oder physikalischen Signalen definiert werden, die vorzugsweise, insbesondere durch Multiplexen, miteinander verschachtelt sind.

9. System nach einem der vorangehenden Ansprüche, wobei ein Abstand zwischen den einzelnen physikalischen Signalen äquidistant ist.

10. System nach einem der vorangehenden Ansprüche, wobei ein Abstand zwischen den einzelnen physikalischen Signalen nicht-äquidistant ist.

11. Verfahren zur Erfassung eines Umfeldes, insbesondere unter Verwendung des Systems nach einem der vorangehenden Ansprüche, wobei mindestens eine Vielzahl M von physikalischen, Chirp Signalen ausgesendet wird, mindestens eine Vielzahl N von virtuellen Chirp Signalen definiert wird, wobei jedes virtuelle Signal mehrere, insbesondere M, Abtastpunkte umfasst, die sich auf die physikalischen Chirps verteilen, und wobei aus einem von einem Objekt des Umfeldes reflektierten, insbesondere heruntergemischten, von der Sende-Empfangseinheit empfangenen Radarsignal, mindestens ein Objektparameter bestimmt wird, wobei der jeweilige Objektparameter unter Berücksichtigung sowohl von Abtastpunkten innerhalb eines physikalischen Signals als auch von Abtastpunkten innerhalb eines virtuellen Signals bestimmt wird.

## Claims

1. Radar system for detecting the surroundings, in particular for a vehicle and/or a transport device, and/or for stationary use, comprising:
at least one transceiver unit for transmitting and receiving radar signals, which is configured to emit a plurality M of physical chirp signals, from which a plurality N of virtual chirp signals can be formed, wherein each virtual signal comprises multiple, in particular M, sampling points distributed on the physical chirps, and
at least one evaluation unit, wherein the evaluation unit determines, from a radar signal reflected from an object of the surroundings and received by the transceiver unit, which is in particular downmixed, at least one object parameter that in particular a distance or a variable dependent thereon and/or based thereon and/or speed or a variable dependent thereon and/or based thereon - wherein the evaluation unit determines the respective object parameter in consideration of both multiple sampling points within a respective physical signal and also multiple sampling points within a respective virtual signal.

2. System as claimed in claim 1, wherein the virtual and/or physical signals are adaptable to system requirements, in particular to a specification for a resolution and/or accuracy and/or clarity in a distance and/or speed determination and/or a specification for a time on target.

3. System as claimed in any one of the preceding claims, wherein the physical and/or virtual signals are linearly modulated and/or ramped in the frequency.

4. System as claimed in any one of the preceding claims, wherein the distance (d) or the variable dependent thereon, such as, in particular, the signal time-of-flight (τ) and/or the variable based thereon, and/or the speed (v) and/or the variable dependent thereon and/or based thereon, is determined in consideration of a slow time frequency (fₛₗₒₚₑ) and/or a fast time frequency (f_{fast}) and/or a sweep rate of the virtual signals (µ_{P}) and/or a sweep rate of the physical signals (µ_{R}) and/or a signal duration (T_{P}) of the virtual signals, in particular a chirp duration, and/or the mean HF transmission frequency (f_{c}), preferably in consideration of the following relationship: $\left(\begin{matrix}{f}_{slow} \\ {f}_{fast}\end{matrix}\right) = A \left(\begin{matrix}d \\ v\end{matrix}\right)$ $\left(\begin{matrix}d \\ v\end{matrix}\right) = {A}^{- 1} \left(\begin{matrix}{f}_{slow} \\ {f}_{fast}\end{matrix}\right)$ with $A = \frac{2}{c} \left[\begin{matrix}{μ}_{P} & {f}_{c} \\ {μ}_{R} & {f}_{c}\end{matrix}\right] \left[\begin{matrix}1 & {T}_{P} \\ 0 & 1\end{matrix}\right] .$

5. System as claimed in any one of the preceding claims, wherein the system is designed as a MIMO radar system.

6. System as claimed in any one of the preceding claims, wherein the system has at least two transmission channels, which are preferably configured for time multiplexing, in particular such that the correspondingly transmitted signals form the same virtual signals.

7. System as claimed in any one of the preceding claims, wherein the system has at least two transmission channels, which are preferably configured for frequency multiplexing, more preferably for fast time frequency multiplexing and/or slow time frequency multiplexing.

8. System as claimed in any one of the preceding claims, wherein at least two groups of virtual and/or physical signals are defined, which are preferably interleaved with one another, in particular by multiplexing.

9. System as claimed in any one of the preceding claims, wherein an interval between the individual physical signals is equidistant.

10. System as claimed in any one of the preceding claims, wherein an interval between the individual physical signals is non-equidistant.

11. Method for detecting the surroundings, in particular using the system as claimed in any one of the preceding claims, wherein at least one plurality M of physical chirp signals is emitted, at least one plurality N of dvirtual chirp signals is defined,
wherein each virtual signal comprises multiple, in particular M, sampling points, which are distributed onto the physical chirps, and
wherein at least one object parameter is determined from a radar signal reflected from an object of the surroundings, in particular downmixed, and received by the transceiver unit,
wherein the respective object parameter is determined in consideration of both sampling points within a physical signal and also sampling points within a virtual signal.

## Revendications

1. Système de radar pour l'acquisition d'un environnement, en particulier pour un véhicule et/ou un dispositif de transport, et/ou pour une utilisation stationnaire, comprenant :
au moins une unité d'émetteur-récepteur pour l'émission et la réception de signaux de radar, qui est configurée pour émettre une multiplicité M de signaux en impulsions compressées physiques à partir desquels une multiplicité N de signaux en impulsions compressées virtuels peut être formée, chaque signal virtuel comprenant plusieurs, de préférence M, spots de détection qui se répartissent sur les impulsions compressées physiques, et
au moins une unité d'analyse, laquelle unité d'analyse détermine, à partir d'un signal de radar réfléchi par un objet de l'environnement, en particulier passé par un mixage descendant, reçu par l'unité d'émetteur-récepteur, au moins un paramètre d'objet, en particulier une distance ou une grandeur dépendant de celle-ci et/ou basée sur celle-ci,
l'unité d'analyse déterminant le paramètre d'objet en question en prenant en compte aussi bien plusieurs spots de détection à l'intérieur d'un signal physique correspondant que plusieurs spots de détection à l'intérieur d'un signal virtuel correspondant.

2. Système selon la revendication 1, dans lequel les signaux virtuels et/ou physiques sont adaptables à des exigences du système, en particulier à une consigne de résolution et/ou de précision et/ou de netteté lors d'une détermination de la distance et/ou de la vitesse et/ou à une consigne de temps pour atteindre la cible.

3. Système selon l'une des revendications précédentes, dans lequel les signaux physiques et/ou virtuels sont modulés en fréquence de façon linéaire et/ou sont en forme de rampe.

4. Système selon l'une des revendications précédentes, dans lequel la distance (d) ou la grandeur dépendant de celle-ci, comme, en particulier, le temps de propagation du signal (T), et/ou la grandeur basée sur celle-ci, et/ou la vitesse (v) et/ou la grandeur dépendante de celle-ci et/ou basée sur celle-ci sont déterminées en tenant compte d'une fréquence de temps lent (f_{slow}) et/ou d'une fréquence de temps rapide (f_{fast}) et/ou d'une vitesse de balayage des signaux virtuels (µ_{P}) et/ou d'une vitesse de balayage des signaux physiques (µ_{R}) et/ou d'une durée de signal (T_{P}) des signaux virtuels, d'une durée d'impulsion compressée et/ou de la fréquence moyenne d'émission HF (f_{c}), de préférence en tenant compte de la relation suivante : $\left(\begin{matrix}{f}_{slow} \\ {f}_{fast}\end{matrix}\right) = A \left(\begin{matrix}d \\ v\end{matrix}\right)$ $\left(\begin{matrix}d \\ v\end{matrix}\right) = {A}^{- 1} \left(\begin{matrix}{f}_{slow} \\ {f}_{fast}\end{matrix}\right)$ où $A = \frac{2}{c} \left[\begin{matrix}{μ}_{P} & {f}_{c} \\ {μ}_{R} & {f}_{c}\end{matrix}\right] \left[\begin{matrix}1 & {T}_{P} \\ 0 & 1\end{matrix}\right] .$

5. Système selon l'une des revendications précédentes, dans lequel le système est conçu comme un système de radar MIMO.

6. Système selon l'une des revendications précédentes, lequel système comporte au moins deux canaux d'émission qui sont de préférence configurés pour un multiplexage temporel, en particulier de telle manière que les signaux émis correspondants forment les mêmes signaux virtuels.

7. Système selon l'une des revendications précédentes, lequel système comporte au moins deux canaux d'émission qui sont de préférence configurés pour un multiplexage en fréquence, et encore de préférence pour un multiplexage en fréquence de temps rapide et/ou un multiplexage en fréquence de temps lent.

8. Système selon l'une des revendications précédentes, dans lequel sont définis au moins deux groupes de signaux virtuels et/ou physiques qui sont de préférence imbriqués l'un dans l'autre, en particulier par multiplexage.

9. Système selon l'une des revendications précédentes, dans lequel une distance entre les différents signaux physiques est équidistante.

10. Système selon l'une des revendications précédentes, dans lequel une distance entre les différents signaux physiques n'est pas équidistante.

11. Procédé d'acquisition d'un environnement, en particulier en utilisant le système selon l'une des revendications précédentes, dans lequel au moins une multiplicité M de signaux en impulsions compressées physiques sont émis, au moins une multiplicité N de signaux en impulsions compressées virtuels sont définis,
dans lequel chaque signal virtuel comprend plusieurs, en particulier M, spots de détection qui se répartissent sur les impulsions compressées physiques, et
dans lequel au moins un paramètre d'objet est déterminé à partir d'un signal de radar réfléchi par un objet de l'environnement, en particulier passé par un mixage descendant, reçu par l'unité d'émetteur-récepteur, le paramètre d'objet en question étant déterminé en prenant en compte aussi bien des spots de détection à l'intérieur d'un signal physique que des spots de détection à l'intérieur d'un signal virtuel.
